# EUROPÄISCHE PATENTSCHRIFT

(11) **EP 2 755 852 B1**
(45) Veröffentlichungstag und Bekanntmachung des Hinweises auf die Patenterteilung: **14.03.2018**
(21) Anmeldenummer: 12784536.0
(22) Anmeldetag: 29.10.2012
(51) Int. Cl.: B60M 3/00, B61L 1/00

(54) **SYSTEM ZUR VERKEHRSSTEUERUNG ELEKTRISCH GETRIEBENER FAHRZEUGE IN EINEM STRAßENNETZ**
SYSTEM FOR PERFORMING TRAFFIC CONTROL OF ELECTRICALLY DRIVEN VEHICLES IN A ROAD NETWORK
SYSTÈME DE RÉGULATION DU DÉPLACEMENT DE VÉHICULES ÉLECTRIQUES DANS UN RÉSEAU ROUTIER

(30) Priorität: 04.11.2011 DE 102011085776
(43) Veröffentlichungstag der Anmeldung: 23.07.2014
(73) Patentinhaber: Siemens Aktiengesellschaft, 80333 München (DE)
(72) Erfinder: FIHLON, Michael, 91056 Erlangen (DE); KINNEMANN, Georg, 15741 Bestensee (DE); MAIER, Rupert, 91330 Eggolsheim (DE); RISTER, Stephan, 90469 Nürnberg (DE); SOMMER, Holger, 91086 Aurachtal (DE)
(86) Internationale Anmeldenummer: PCT/EP2012/071344
(87) Internationale Veröffentlichungsnummer: WO 2013/064447

(56) Entgegenhaltungen:
- EP-A2- 1 487 079
- DE-A1- 19 654 960
- GB-A- 2 477 166
- US-A1- 2010 328 101
- US-A1- 2011 144 831

## Beschreibung

Die Erfindung betrifft ein System zur Verkehrssteuerung elektrisch getriebener Fahrzeuge in einem Straßennetz.

Die Energieversorgung von elektrisch getriebenen Straßenfahrzeugen wird durch verschiedene Infrastruktureinrichtungen gewährleistet. Für Personenkraftwagen sind Ladestationen an privaten Stellplätzen im Heimbereich oder an öffentlich zugänglichen Parkplätzen bekannt, um den fahrzeugseitigen Energiespeicher aufladen zu können. Bei Oberleitungsbussen im öffentlichen Personennahverkehr oder bei Lastkraftwagen im Tagebau ist es bekannt, die Fahrzeuge über eine zweipolige Fahrleitung einer Oberleitungsanlage mit Traktionsenergie zu versorgen. Aufgrund der geringen Fahrzeuganzahl und des fahrplanmäßigen und signalgesteuerten Fahrbetriebs können die Speiseabschnitte der Fahrleitung derart ausgelegt werden, dass die Auslegungsgrenzen durch die tatsächliche Lastaufnahme der Fahrzeuge in der Regel eingehalten werden.

Die Einhaltung dieser infrastrukturseitigen Vorgabe ist im elektrifizierten Individualverkehr jedoch problematisch, wie dies bei der Energieversorgung von elektrisch oder diesel-elektrisch getriebenen Lastkraftwagen der Fall ist, die während der Fahrt über eine straßenseitig - beispielsweise im Bereich der rechten Fahrspur von Autobahnen - installierte Fahrleitung zur Energieversorgung, etwa über einen fahrzeugseitigen Stromabnehmer, koppelbar sind. Die Lastaufnahme aus einem Speiseabschnitt des Fahrleitungsnetzes ist aufgrund der Schwankungen im Verkehrsaufkommen schwer vorhersagbar. Die elektrischen Infrastruktureinrichtungen müssen für die maximale Leistungsaufnahme von sich in einem Speiseabschnitt bewegenden Fahrzeugen ausgelegt werden, obwohl diese nur in Spitzenzeiten benötigt wird. Anlagen zur Erzeugung und Übertragung der Energie könnten damit verglichen mit der tatsächlichen Lastaufnahme erheblich überdimensioniert, aber in Fällen der unvorhergesehenen Verlagerung von Verkehrsströmen auch unterdimensioniert sein. Die elektrischen Anlagen und die Infrastruktur der Autobahn werden nicht wirtschaftlich betrieben.

Der Erfindung liegt daher die Aufgabe zugrunde, ein straßenseitig angeordnetes Fahrleitungsnetz, mit welchem Straßenfahrzeuge des Individualverkehrs zur Energieübertragung während der Fahrt koppelbar sind, innerhalb der ausgelegten Lastgrenzen zu betreiben.

Die Aufgabe wird erfindungsgemäß gelöst durch ein System zur Verkehrssteuerung elektrisch getriebener Fahrzeuge in einem Straßennetz gemäß Patentanspruch 1. Die Fahrzeuge sind zur Energieübertragung während der Fahrt mit dem straßenseitig angeordneten Fahrleitungsnetz koppelbar, welches getrennt voneinander versorgte Speiseabschnitte mit auslegbaren Lastgrenzen aufweist. Das System umfasst Prognosemittel zur Prognose eines Lastbedarfs in einem Speiseabschnitt, Beeinflussungsmittel zur Beeinflussung einer Lastaufnahme von Fahrzeugen im Speiseabschnitt, und Steuerungsmittel zur Bewertung des prognostizierten Lastbedarfs hinsichtlich der Lastgrenze des Speiseabschnittes und zur Auswahl von gegebenenfalls erforderlichen Steuerungseingriffen für Beeinflussungsmittel. Durch die Prognose des in einem vorgebbaren Prognosezeitraum, der sowohl kurz- als auch mittelfristig sein kann, geforderten Lastbedarfs kann durch Vergleich mit den ausgelegten Lastgrenzen der Speiseabschnitte rechtzeitig auf den Lasthaushalt Einfluss genommen werden, um kritische Überlastsituationen abzuwenden oder zügig aufzulösen. Hierzu werden abhängig vom Bewertungsergebnis Steuereingriffe ausgewählt, die über Beeinflussungsmittel umgesetzt werden. Dazu zählen sowohl einfache Hinweise zur Beeinflussung von Fahrzeugfahrern, automatische Steuereingriffe in die Fahrzeugführung, aber auch übergeordnete Steuereingriffe zur Beeinflussung der Lastbilanzen in den betroffenen Speiseabschnitten. Im erfindungsgemäßen Verkehrssteuerungssystem weisen die Prognosemittel Erfassungsmittel zur Erfassung einer Verkehrs- und/oder Wettersituation für einen dem Speiseabschnitt zugeordneten Straßenabschnitt und Rechenmittel zur Berechnung des Lastbedarfs aus der erfassten Verkehrs- und/oder Wettersituation und/oder aus einem Verlauf der Straßenneigung des Straßenabschnittes anhand eines Prognosemodells, welches die Lastaufnahme eines Fahrzeugs in Abhängigkeit seines Gesamtgewichts und/oder seiner Geschwindigkeit und/oder Beschleunigung bei unterschiedlichen Straßenneigungen und/oder der Wettersituation angibt, auf. Grundlage für das erfindungsgemäße System ist eine solide zeitnahe Datenbasis für die Lastbedarfsprognose. Zur Berechnung dient ein Prognosemodell, das mit der Leistungsaufnahme eines Fahrzeugs in Abhängigkeit verschiedener Parameter parametriert ist. So beeinflussen das durch Fahrzeugart und transportierter Fracht bestimmte Gesamtgewicht, die Geschwindigkeit und Beschleunigung bei einer bestimmten Straßenneigung, aber auch die Wettersituation über Windverhältnisse und Bodenhaftung die Lastaufnahme eines elektrisch getriebenen Fahrzeugs. Die Erfassung der Verkehrsituation, einschließlich einer aktuellen Verkehrslage und einer künftigen Verkehrsnachfrage für den Straßenabschnitt liefert eine Anzahl an Durchfahrten durch den Straßenabschnitt für verschiedene Fahrzeuge. Die im Prognosemodell hinterlegten Streckenprofile der Straßenabschnitte mit Neigungsverlauf und Abschnittslänge erlauben dann eine verwertbare Prognose. Hier können beispielsweise auch auf dem Straßenabschnitt liegende Zu- oder Abfahrten berücksichtigt werden.

Vorzugsweise weisen die Erfassungsmittel des erfindungsgemäßen Verkehrssteuerungssystems straßenseitig angeordnete Fahrzeugdetektoren zur Erfassung einer Verkehrsstärke und/oder einer mittleren Geschwindigkeit auf. Hierzu können beispielsweise bereits installierte Induktionsschleifen, Infrarotdetektoren, Radargeräte oder Videokameras zum Einsatz kommen, die dazu ausgebildet sind, einen Messquerschnitt im Straßennetz passierende Fahrzeuge und deren Geschwindigkeit zum Passagezeitpunkt zu erfassen. Die erfassten Messdaten werden dann zu einer Verkehrsstärke, also der Anzahl an pro Zeiteinheit den Messquerschnitt passierenden Fahrzeuge, und zu einer mittleren Geschwindigkeit am Messquerschnitt aggregiert. Die verkehrstechnischen Messgrößen können auch für Fahrzeuge unterschiedlicher Gewichtsklassen getrennt erfasst werden. Durch geeignete Anordnung von Messquerschnitten im zu prognostizierenden Straßenabschnitt und in diesem vor- und nachgelagerten Straßenabschnitten kann eine auswertbare Aufnahme der Verkehrssituation gewonnen werden.

Vorzugsweise weisen die Erfassungsmittel des erfindungsgemäßen Verkehrssteuerungssystems in Fahrzeugen angeordnete Fahrzeuggeräte zur Erfassung der aktuellen Position und Geschwindigkeit des jeweiligen Fahrzeugs sowie zur Übertragung von zugeordneten Daten an die Rechenmittel auf. Die derart gewonnene Verkehrssituation repräsentiert zwar nur die Teilverkehrsströme von mit Fahrzeuggeräten ausgestatteten Fahrzeugen, liefern aber hinsichtlich der gewonnenen Verkehrsdaten und hinsichtlich ihrer Zuordnung zu einem Fahrzeug mit bekanntem Gesamtgewicht ein genaueres Bild.

Vorzugsweise weisen die Erfassungsmittel des erfindungsgemäßen Verkehrssteuerungssystems eine Schnittstelle zu einem Flottenmanagementsystem einer Flotte von Fahrzeugen auf, über welche von einem Flottenbetreiber geplante Touren der Fahrzeuge abrufbar sind. Unter der Annahme, dass ein Großteil der elektrisch getriebenen Lastkraftwagen einer Fahrzeugflotte mit zentralem Flottenmanagement angehören, etwa einer Spedition oder anderen Logistikunternehmen, kann die Verkehrssituation durch die Tourenplanung des Flottenbetreibers gut erfasst und damit der Lastbedarf mit großer Genauigkeit prognostiziert werden.

Vorzugsweise weisen die Erfassungsmittel des erfindungsgemäßen Verkehrssteuerungssystems eine Schnittstelle zu einem Verkehrsinformationssystem auf, über welche die Verkehrssituation im Bereich des Straßenabschnittes abrufbar ist. Verkehrsinformationssysteme oder Verkehrsmanagementsysteme, die bereits im Besitz der interessierenden Verkehrssituation sind, können über eine geeignete Schnittstelle an das erfindungsgemäße System angebunden werden. Dies ist insbesondere von Vorteil, da über solche Systeme Verkehrsstaus, die durch Baustellen, Veranstaltungen, Ferien oder sonstigen dort bekannten Ereignissen, vorhergesagt werden können. Diese Vorhersagen betreffen den gesamten Verkehr, also auch herkömmlich getriebene Fahrzeuge, und ergänzen daher das über die Flottenmanagementsysteme gewonnene Bild der Verkehrssituation.

Vorzugsweise weisen die Erfassungsmittel des erfindungsgemäßen Verkehrssteuerungssystems straßenseitig angeordnete Wettersensoren und/oder eine Schnittstelle zu einem Wetterinformationssystem auf, über welche die Wettersituation im Bereich des Straßenabschnittes abrufbar ist. Wettersensoren dienen der Erfassung von Niederschlagsmengen, Umgebungstemperaturen, Sichtverhältnissen und Windgeschwindigkeiten im Bereich eines Straßenabschnittes, deren Werte Einfluss auf das Fahrverhalten und die Energieaufnahme von Fahrzeugen im zugeordneten Speiseabschnitt haben. Alternativ kann die Wettersituation auch über die Anbindung an ein Wetterinformationssystem, in welchen diese Wetterinformationen bereits vorliegen, erfasst werden. Im erfindungsgemäßen Verkehrssteuerungssystem weisen die Beeinflussungsmittel straßenseitig angeordnete Aktorikeinrichtungen und/oder im Fahrzeug angeordnete Fahrzeuggeräte auf, mittels derer Hinweise an Fahrer von Fahrzeugen zur Verminderung der Lastaufnahme als Steuereingriffe ausgebbar sind. Als Aktorikeinrichtungen kommen Lichtsignalgeber zur Sperrung beziehungsweise Freigabe der Einfahrt in oder Durchfahrt durch einen Straßenabschnitt in Frage. Des Weiteren kommen als Aktorikeinrichtungen Wechselzeichengeber zur wechselweisen Abgabe unterschiedlicher Fahrerhinweise in Betracht. Ebenfalls können über Anzeigen oder Lautsprecher von Fahrzeuggeräten, welche gleichzeitig als Erfassungsmittel verwendet werden können, Fahrer beeinflussende Hinweise ausgegeben werden. Dies ermöglicht eine gezielte, gegebenenfalls fahrzeuggenaue Adressierung von Fahrerhinweisen.

Vorzugsweise ist das Fahrzeuggerät des erfindungsgemäßen Verkehrssteuerungssystems dazu ausgebildet, Fahrerhinweise automatisch durch Ansteuerung von Fahrzeugkomponenten umzusetzen. Diese Autopilotfunktion ermöglicht es einem Operator des Verkehrssteuerungssystems in kritischen Fällen auf Fahrzeugkomponenten, wie der Antriebssteuerung eines Elektro- oder Hybridantriebs oder der Managementeinheit eines Energiespeichers, direkt Einfluss zu nehmen. Hierdurch können automatische oder teilautomatische Steuereingriffe auf die Lastbilanz eines Speiseabschnittes schnell umgesetzt werden, um beispielsweise einen drohenden Versorgungsausfall wegen Überlastung des Fahrleitungsnetzes abzuwenden.

Vorzugsweise sind die Steuerungsmittel des erfindungsgemäßen Verkehrssteuerungssystems dazu ausgebildet, als Fahrerhinweis eine Routenvorgabe zur Umfahrung eines überlastgefährdeten Speiseabschnittes auszuwählen. Durch Vorgabe einer Umgehungsroute, vorzugsweise über Straßenabschnitte, welchen schwach ausgelastete Speiseabschnitte zugeordnet sind, kann die Lastaufnahme im gefährdeten Speiseabschnitt reduziert werden. Gleichzeitig können die Verkehrsströme zur Vermeidung eines Verkehrsstaus gelenkt werden.

Vorzugsweise sind die Steuerungsmittel des erfindungsgemäßen Verkehrssteuerungssystems dazu ausgebildet, als Fahrerhinweis eine Geschwindigkeitsbeschränkung in einem überlastgefährdeten Speiseabschnitt auszuwählen. Neben einer Senkung der tatsächlichen Lastaufnahme aus dem Speiseabschnitt führt dieser Steuereingriff zu einer Verkehrsberuhigung im zugeordneten Straßenabschnitt.

Vorzugsweise sind die Steuerungsmittel des erfindungsgemäßen Verkehrssteuerungssystems dazu ausgebildet, als Fahrerhinweis eine Sperrung der Einfahrt in einen überlastgefährdeten Speiseabschnitt auszuwählen. Zur Entlastung des gefährdeten Speiseabschnittes kann an Zufahrten in den zugeordneten Straßenabschnitt über Lichtsignale oder über das Fahrzeuggerät eine Dosierung des zufließenden Fahrzeugstromes bewerkstelligt werden.

Vorzugsweise sind die Steuerungsmittel des erfindungsgemäßen Verkehrssteuerungssystems dazu ausgebildet, als Fahrerhinweis eine Anfahranweisung zur Auflösung eines Verkehrsstaues in einem überlastgefährdeten Speiseabschnitt auszuwählen. Straßenabschnitte, in denen sich ein Verkehrsstau ausgebildet hat, sind durch die Lastaufnahme bei den Anfahrvorgängen besonders akut überlastgefährdet. Durch ein sukzessives, zeitlich versetztes Anfahren der aufgestauten Fahrzeuge kann eine Überlastung des Fahrleitungsnetzes vermieden werden. Als Steuereingriff können den Fahrzeugen Anfahrsignale mit Zeitlücke übermittelt werden. Erfindungsgemäß sind die Steuerungsmittel des Verkehrssteuerungssystems dazu ausgebildet, als Fahrerhinweis eine Aufforderung zur Umstellung von Elektro- auf Kraftstoffantrieb auszuwählen. Bei diesel-elektrisch angetriebenen Fahrzeugen kann als lastvermindernder Steuereingriff eine Umschaltung im Antriebsstrang auf den Verbrennungsmotor vorgenommen werden, wenn dabei die Lastaufnahme aus dem Speiseabschnitt unterbrochen wird. Erfindungsgemäß sind die Steuerungsmittel des Verkehrssteuerungssystems dazu ausgebildet, als Fahrerhinweis eine Aufforderung zur Umstellung der Lastaufnahme vom Fahrleitungsnetz auf einen fahrzeugseitigen Energiespeicher auszuwählen. Bei ausreichendem Ladezustand des Energiespeichers kann vorübergehend auch auf eine Lastaufnahme aus dem Speiseabschnitt verzichtet und die Traktionsenergie aus dem Energiespeicher bezogen werden. Erfindungsgemäß sind die Steuerungsmittel des Verkehrssteuerungssystems dazu ausgebildet, als Fahrerhinweis eine Aufforderung zur Rückspeisung von Energie aus einem fahrzeugseitigen Energiespeicher in das Fahrleitungsnetz auszuwählen. Um die Lastbilanz in einer Speiseabschnitt des Fahrleitungsnetzes aufzubessern, können Fahrzeuge zur Rückspeisung von Energie aufgefordert werden, die in ausreichend geladenen Energiespeichern vorrätig ist oder durch Gefälle- oder Verzögerungsfahrt gewonnen wird.

In einer bevorzugten Ausführungsform des erfindungsgemäßen Verkehrssteuerungssystems sind die Steuerungsmittel dazu ausgebildet, das Fahrleitungsnetz zum Lastausgleich mit einem anderen Energieversorgungsnetz zu koppeln. Der Lasthaushalt eines Speiseabschnittes kann auch durch Kopplung beispielsweise mit einem öffentlichen Stromversorgungsnetz oder mit einem Eisenbahnstromversorgungsnetz ausgeglichen werden.

In einer vorteilhaften Ausgestaltung des erfindungsgemäßen Verkehrssteuerungssystems sind die Rechenmittel dazu ausgebildet, Energiebezugskosten für eine Tour, die durch eine Tourenroute im Straßennetz und/oder einen Tourenzeitraum und/oder das Gesamtgewicht des Fahrzeuges definierbar ist, anhand des Prognosemodells, welches ferner einen bezugszeitabhängigen Energiepreis von über das Fahrleitungsnetz zu beziehender Energie angibt, zu berechnen. Wird der Energiepreis von einem Energieversorgungsunternehmen bereitgestellt, hängt dessen Höhe typischerweise von Bezugsmenge, Bezugszeit und gegebenenfalls der Frühzeitigkeit einer Bestellung dieses Energiebezugs ab. Mit dieser Preisinformation und den übrigen Energieverbrauchsparametern des Prognosemodells können die Rechenmittel die Energiebezugskosten für eine geplante oder auch durchgeführte Tour im Straßennetz berechnen.

Vorzugsweise ist im erfindungsgemäßen Verkehrssteuerungssystem über das Flottenmanagementsystem eine vom Flottenbetreiber geplante Tour buchbar, wobei der den Energiebezugskosten zugrunde liegende Energiepreis abhängig vom Buchungszeitpunkt und/oder von gegebenenfalls vorgenommenen Buchungsänderungen variierbar ist. So können mit dem erfindungsgemäßen System automatisch gewisse Energiekontingente über die Tourenplanung gebucht werden, die umso günstiger sind, je früher diese gebucht werden. Ebenso kann über die Energiebezugskosten ein Anreiz zur frühzeitigen Tourenplanung und zur Vermeidung von Tourenumbuchungen geschaffen werden.

In einer weiteren vorteilhaften Ausführungsform weist das erfindungsgemäße Verkehrssteuerungssystem Abrechnungsmittel auf, die zur zentralen Berechnung und Erhebung von bei der Nutzung des Straßen- und Fahrleitungsnetzes durch ein Fahrzeug verursachten Energiebezugskosten und/oder Straßenbenutzungsgebühren und/oder Parkgebühren ausgebildet sind. Insbesondere für Flottenbetreiber können in nachvollziehbarer Weise automatisch Abrechnungen für die Nutzung der Infrastruktureinrichtungen, wie Fahrleitungsnetz, mautpflichtige Straßenabschnitte und gebührenpflichtige Parkplätze, durchgeführt werden.

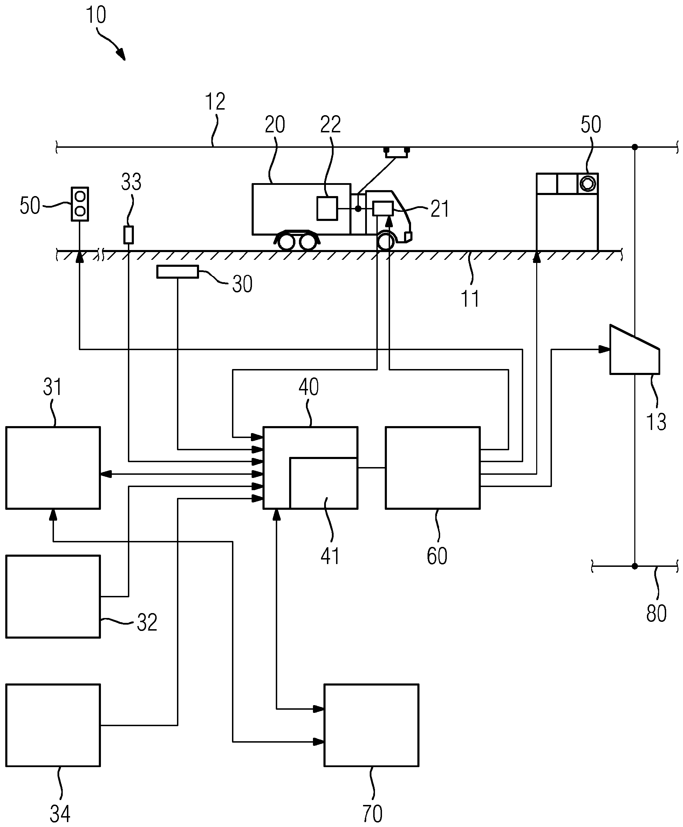

Weitere Eigenschaften und Vorteile ergeben sich aus nachfolgender Beschreibung eines Ausführungsbeispiels anhand der Zeichnung, in deren einziger Figur ein erfindungsgemäßes Verkehrssteuerungssystem schematisch veranschaulicht ist.

Gemäß der einzigen Figur steuert ein erfindungsgemäßes Verkehrssteuerungssystem 10 den Verkehr in einem Straßennetz, in welchem elektrisch getriebene Fahrzeuge 20 zur Energieübertragung während der Fahrt mit einem straßenseitigen Fahrleitungsnetz koppelbar sind. Das Fahrleitungsnetz weist getrennt voneinander versorgte Speiseabschnitte 12 mit auslegbaren Lastgrenzen auf. Das Fahrleitungsnetz kann durch eine Kettenwerks-Oberleitungsanlage gebildet sein, die über einer Fahrspur hängende Hin- und Rückleiter für den mit der Energieübertragung einhergehenden Stromfluss aufweist. Die Energieübertragung zum Antrieb und zu einem Energiespeicher 22 des Fahrzeugs 20 erfolgt über einen nachführbaren Stromabnehmer zum Ausgleichen seitlicher Fahrungenauigkeiten. Der Stromabnehmer weist Kontaktstücke auf, die beim Befahren der Fahrleitung mit dieser in elektrischem Schleifkontakt steht. Auf einem dem Speiseabschnitt 11 zugeordneten Straßenabschnitt 11 herrscht ein Mischverkehr aus elektrisch getriebenen Fahrzeugen 20 und konventionellen Fahrzeugen. Erfindungsgemäß umfasst das Verkehrssteuerungssystem Prognosemittel zur Prognose eines Lastbedarfs in einem Speiseabschnitt 12, Beeinflussungsmittel zur Beeinflussung einer Lastaufnahme von Fahrzeugen 20 im Speiseabschnitt 12, und Steuerungsmittel 60 zur Bewertung des prognostizierten Lastbedarfs hinsichtlich der Lastgrenze des Speiseabschnittes 12 und zur Auswahl von gegebenenfalls erforderlichen Steuerungseingriffen für Beeinflussungsmittel. Hierdurch kann die Lastbilanz in den Speiseabschnitten 12 des Fahrleitungsnetzes steuernd beeinflusst werden, um ein drohende Überschreitung eine Lastgrenze zu vermeiden. Dies ermöglicht eine stabile Energieversorgung im Fahrleitungsnetz und einen geregelten Verkehrsfluss im Straßennetz.

Die Prognosemittel weisen Erfassungsmittel zur Erfassung einer Verkehrs- und/oder Wettersituation für einen dem Speiseabschnitt 12 zugeordneten Straßenabschnitt 11 auf. Die Erfassungsmittel können straßenseitig angeordnete Fahrzeugdetektoren 30 zur Erfassung einer Verkehrsstärke und/oder einer mittleren Geschwindigkeit, in Fahrzeugen 20 angeordnete Fahrzeuggeräte 21 zur Erfassung der aktuellen Position und Geschwindigkeit des jeweiligen Fahrzeugs 20 sowie zur Übertragung von zugeordneten Daten an die Rechenmittel 40 und straßenseitig angeordnete Wettersensoren 33 aufweisen. Die Erfassungsmittel können aber auch Schnittstellen zu einem Flottenmanagementsystem 31 einer Flotte von Fahrzeugen 20, über welche von einem Flottenbetreiber geplante Touren der Fahrzeuge 20 abrufbar sind, zu einem Verkehrsinformationssystem 32, über welche die Verkehrssituation im Bereich des Straßenabschnittes 11 abrufbar ist, und zu einem Wetterinformationssystem 34, über welche die Wettersituation im Bereich des Straßenabschnittes 11 abrufbar ist, aufweisen.

Die Prognosemittel weisen ferner Rechenmittel 40 zur Berechnung des Lastbedarfs aus der erfassten Verkehrs- und/oder Wettersituation und/oder aus einem Verlauf der Straßenneigung des Straßenabschnittes 11 anhand eines Prognosemodells 41 auf. Im Prognosemodell 41 ist die Lastaufnahme eines Fahrzeugs 20 in Abhängigkeit seines Gesamtgewichts und/oder seiner Geschwindigkeit und/oder Beschleunigung bei unterschiedlichen Straßenneigungen und/oder der Wettersituation angegeben.

Die Beeinflussungsmittel weisen straßenseitig angeordnete Aktorikeinrichtungen 50 und/oder im Fahrzeug 20 angeordnete Fahrzeuggeräte 21 auf, mittels derer Hinweise an Fahrer von Fahrzeugen 20 zur Verminderung der Lastaufnahme als Steuereingriffe ausgebbar sind.

Die Steuerungsmittel 60 sind dazu ausgebildet, aus folgenden Fahrerhinweisen auszuwählen, die eine nicht abschließende Aufzählung bilden:
- Routenvorgabe zur Umfahrung eines überlastgefährdeten Speiseabschnittes 12,
- Geschwindigkeitsbeschränkung in einem überlastgefährdeten Speiseabschnitt 12,
- Sperrung der Einfahrt in einen überlastgefährdeten Speiseabschnitt 12,
- Anfahranweisung zur Auflösung eines Verkehrsstaues in einem überlastgefährdeten Speiseabschnitt 12,
- Aufforderung zur Umstellung von Elektro- auf Kraftstoffantrieb,
- Aufforderung zur Umstellung der Lastaufnahme vom Fahrleitungsnetz auf einen fahrzeugseitigen Energiespeicher 22,
- Aufforderung zur Rückspeisung von Energie aus einem fahrzeugseitigen Energiespeicher 22 in das Fahrleitungsnetz.

Das Fahrzeuggerät 21 ist dazu ausgebildet, Fahrerhinweise automatisch durch Ansteuerung von Fahrzeugkomponenten umzusetzen.

Die Steuerungsmittel 60 sind ferner dazu ausgebildet, das Fahrleitungsnetz zum Lastausgleich mit einem anderen Energieversorgungsnetz 80 zu koppeln. Hierzu wirken die Steuerungsmittel 60 auf ein Unterwerk 13, das die Versorgungsspannung des Energieversorgungsnetzes 80 in die Fahrleitungsspannung umwandelt.

Die Rechenmittel 40 sind ferner dazu ausgebildet, Energiebezugskosten für eine Tour, die durch eine Tourenroute im Straßennetz und/oder einen Tourenzeitraum und/oder das Gesamtgewicht des Fahrzeuges 20 definierbar ist, anhand des Prognosemodells 41, welches ferner einen bezugszeitabhängigen Energiepreis von über das Fahrleitungsnetz zu beziehender Energie angibt, zu berechnen.

Über das Flottenmanagementsystem 31 ist eine vom Flottenbetreiber geplante Tour buchbar, wobei der den Energiebezugskosten zugrundeliegende Energiepreis abhängig vom Buchungszeitpunkt und/oder von gegebenenfalls vorgenommenen Buchungsänderungen variierbar ist.

Das Verkehrssteuerungssystem 10 weist auch Abrechnungsmittel 70 auf, die zur zentralen Berechnung und Erhebung von bei der Nutzung des Straßen- und Fahrleitungsnetzes durch ein Fahrzeug 20 verursachten Energiebezugskosten und/oder Straßenbenutzungsgebühren und/oder Parkgebühren ausgebildet sind.

Zur Datenübertragung kommunizieren die genannten Systeme, Mittel, Sensorik- und Aktorikeinrichtungen, und dergleichen, über wenigstens teilweise drahtlose Datenverbindungen, die beispielsweise als Teil von Datennetzwerken ausgebildet sein können.

Das erfindungsgemäße Verkehrssteuerungssystem 10 kann eine - in der Figur nicht explizit dargestellte - Leitstelle aufweisen, mit einer Schnittstelle zur Entgegennahme und/oder Anforderung aller für die Verkehrssteuerung relevanten Basisinformationen. Es kann die Nutzung eines Ressourcenmodells vorgesehen sein, das angibt, welche Infrastruktur wie viele Fahrzeuge 20 verträgt und welche Infrastrukturen, zum Beispiel Autobahn und Parkplätze, wie miteinander korreliert sind. In der Leitstelle findet dann die automatische Prognose des Lastbedarfs zu einem bestimmten Zeitpunkt für einen bestimmten Straßenabschnitt 11 mittels Charakterisierung der zugehörigen Wetter- und Verkehrssituation, sowie abhängig von der Tageszeit, dem Wochentag, der Jahreszeit, von Unfällen, Massenereignissen, dem Wetter, und dergleichen, mittels Berücksichtigung der von den Speditionen gebuchten Touren und mittels vorhandener Straßennetzinformationen statt.

Es erfolgt eine von der Leitstelle aus gesteuerte Auflösung von Staus, bei welchen in der Regel eine zu hohe Dichte von Lastkraftwagen auf der Autobahn entsteht. Eine Selbstauflösung von Staus durch die Fahrer würde zu einer Lastspitze im Speiseabschnitt führen, wenn viele Fahrzeuge 20 unkoordiniert zu gleicher Zeit wieder anfahren, so dass mit einem Zusammenbrechen der Energieversorgung gerechnet werden müsste.

Erfindungsgemäß erfolgen Steuereingriffe von der Leitstelle aus mit dem Ziel Lastspitzen abzufedern. Dies kann durch einen Lastausgleich mit anderen Netzen, etwa dem der Bahn oder dem öffentlichen Stromnetz, erzielt werden. Ergänzend können historischer Lastdaten ausgewertet werden. Ferner können Energiespeicher 22 der Fahrzeuge 20 durch Energiespeicherung und Energieentnahme auf Basis des prognostizierten Lastbedarfs genutzt werden. Einzelne Fahrzeuge 20 können bei Lastspitzen zur Umstellung auf Dieselbetrieb aufgefordert werden. Gegebenenfalls kann die Leitstelle sogar das Energiemanagement des Fahrzeugs 20 selbst und zu benachbarten Fahrzeugen 20 übernehmen. Nach einer Talfahrt mit der Möglichkeit, Energie zwischenzuspeichern beziehungsweise zurückzuspeisen, folgt oft auch ein Anstieg mit hohem Energieverbrauch.

Durch die Erfassungsmittel erfolgt eine Online-Erfassung der tatsächlich genutzten Infrastruktur durch Erfassung der gefahrenen Transportrouten und aktuellen Positionen der Fahrzeuge 20 über deren Fahrzeuggeräte 21. Es erfolgt eine Einrichtung, Veröffentlichung und Online-Aktualisierung eines virtuellen Fahrplanes zur optimalen Nutzung der vorhandenen Infrastruktur. Außerdem wird ein Online-Erkennung von Optimierungspotentialen und Änderungsnotwendigkeiten aufgrund sich veränderter Auslastungs- und Verfügbarkeitssituationen realisiert. Eine automatische Staufrüherkennung, ein adaptiver Autopilot oder auch die Weitergabe von Empfehlungen zur Änderung der fahrplanmäßigen Route an den Fahrer können von der Leitstelle aus erfolgen.

Möglich ist auch ein Verfahren zur Ermittlung des zu erwartenden Preises für die Nutzung der Infrastruktur auf Basis aufkommensgerechter Bezahlmodelle, einschließlich einer Mautdifferenzierung. Dies soll Anreize geben, Güter dann zu transportieren, wenn die Auslastung der Infrastruktur gering ist.

Eine linienförmige Verkehrsüberwachung und -beeinflussung erfolgt zum Beispiel mittels dynamischer Routenempfehlungen, dynamischer Geschwindigkeits- und Abstandsbegrenzungen und mittels eines Autopiloten.

Von der Leitstelle aus ist das Führen eines Dialoges mit einer Bedienstation eines Flottenmanagementsystems 31, etwa einer Spedition, zur Vereinbarung und Charakterisierung von Touren möglich: Über den Dialog werden Tourenaufträge entgegengenommen, wobei Startort beziehungsweise die aktuelle Position des Fahrzeugs 20, Zielort, gewünschter Startzeitpunkt, transportierte Ware, Beladungszustand, Priorität und späteste akzeptable Ankunftszeit, und dergleichen, abgefragt werden. Dabei werden rechtlicher Vorgaben, wie zum Beispiel Ruhezeiten oder Gefahrguttransporte, berücksichtigt. Es werden mögliche Zeitfenster identifiziert und darauf aufsetzend Touren mit automatischer Vorhersage der zu erwartenden Auslastungssituation der Route und des zu erwartenden Preises sowie sonstiger aktueller Daten vorgeschlagen. Über das Fahrzeuggerät 21 wird der Fahrer eines Fahrzeugs 20 über die zu fahrende Tour entsprechend dem bei der Spedition eingegangenen Tourenauftrag informiert. Das System 10 ermöglicht eine automatisierte Preisermittlung und Abrechnung gegenüber der zugehörigen Spedition auf Basis der tatsächlich genutzten Infrastrukturdienste und hinterlegten Bezahlmodelle. Die Nutzung Infrastruktur kann an die Fahrzeuge entsprechend des virtuellen Fahrplans frei geschaltet oder gesperrt oder bei außerplanmäßiger Nutzung verteuert werden. Es können Ausnahmesituationen, wie Stau, Ausfall von Infrastruktur, liegengebliebene Fahrzeuge, und dergleichen, erkannt und Geschwindigkeits- und Ausweichempfehlungen erstellt und weitergegeben werden. Die Leitstelle nimmt auch Infrastrukturdaten, etwa Parkplatzzuweisungen, entgegen und gibt diese an Fahrzeuggeräte 20 weiter. Schließlich erfasst die Leitstelle den Energieverbrauch der Fahrzeuge 20 und kann als zentrale Abrechnungsstelle 70 für Speditionen dienen.

Das Flottenmanagementsystem 31 weist eine Bedienstation auf, die als Schnittstelle zur Anmeldung, zur sicheren Authentifizierung und zum Einloggen eines Flottenbetreibers, beispielsweise einer Spedition, in die Leitstelle des erfindungsgemäßen Systems 10 dient. Sie weist auch eine Schnittstelle zur Definition und Bekanntgabe von Speditionen, Fahrzeugen 20, Fahrern, usw. in der Leitstelle auf. Über die Bedienstation kann ein Dialog zur Eingabe einer Touranfrage und zum Aushandeln eines Tourauftrages geführt und zeit- und streckenbezogenen Energiekontingente reserviert und gebucht werden. Es kann auch ein Dialog zur Online-Status-Visualisierung der Fahrzeuge 20 einer Spedition über die Leitstelle geführt werden. Eine Schnittstelle dient der Bekanntgabe von Abweichungen gegenüber der ursprünglich ausgehandelten Tour. Die Bedienstation kann durch einen an sich bekannten Personalcomputer mit entsprechenden Computerprogrammen oder auch durch Anbindung an die Internetseite der Leitstelle gebildet sein.

Die Fahrzeuggeräte 21 bieten eine Schnittstelle zur Visualisierung der vorgesehenen Tour, zur Weitermeldung des Zustandes des Fahrzeuges 20, etwa des Ladungszustandes eines Energiespeichers 22 oder der geladene Ware, zur Leitstelle für eine Berechtigungsprüfung und Freigabe zum Bezug elektrischer Energie, zur Leitstelle für eine Übertragung des Energieverbrauchs je Fahrzeug. Ferner bietet es eine Schnittstelle zur Leitstelle für eine Standortbestimmung der Fahrzeuge 20, zum Dialogaufbau und zur Beeinflussung des lokalen Ressourcen-Managements, also wann wird der Energiespeicher 22 des Fahrzeugs 20 geladen und wann wird Energie vom Energiespeicher 22 entnommen und nicht aus dem Fahrleitungsnetz. Es stellt eine Schnittstelle zur Visualisierung von Tourenänderungen, etwa durch früheren oder späteren Halt oder eine kürzere oder längere Pause oder eine alternative Route zur Verfügung. Über sie erfolgt auch eine automatische Einflussnahme auf das Verhalten des Fahrers. Des Weiteren können durch den Fahrer Ausnahmesituationen, wie Panne, Stau, Baustelle, und dergleichen, eingegeben werden. Über die Schnittstelle werden auch Online-Vorgaben des Spediteurs visualisiert. Schließlich kann automatisch ein Dialog mit der Bedienstation der Spedition bei vordefinierten Situationen, etwa bei Erreichen des Zielortes, bei Änderung der ursprünglich vereinbarten Route, bei Überschreiten eines Grenzwertes für eine erwartete Verzögerung, und vieles mehr, aufgenommen werden.

Mit dem erfindungsgemäßen System 10 lässt sich die Verkehrsdichte planen. Es ermöglicht die Umsetzung eines Infrastruktur-Betreibermodells für die adressierte Domäne, bei dem durch Transportunternehmen beziehungsweise Spediteure Zeitschlitze reserviert beziehungsweise erworben werden können, mit der Konsequenz, dass nur Fahrzeuge 20, die für diesen Zeitschlitz berechtigt sind, kostengünstig mit elektrischer Energie versorgt werden. Auf diese Weise erfolgt eine Homogenisierung der Verkehrsdichten, um so einen maximalen Durchsatz an Fahrzeugen 20 in Bezug auf die elektrische Infrastruktur zu erhalten.

Ferner ermöglicht das erfindungsgemäße System 10 ein Online-Ressourcen-Management auf Basis von aktuell erfassten Daten. Dies erfolgt durch eine aktive Lenkung des Verkehrs und Unterstützung des Fahrers mit dem Ziel, umgehend auf die jeweils aktuelle Verkehrssituation reagieren zu können, um trotz Veränderungen gegenüber dem ursprünglichen Fahrplan einen maximalen Durchsatz an Fahrzeugen 20 in Bezug auf die elektrische Infrastruktur zu erreichen, und um sicherzustellen, dass die Auslegungsgrenzen der Anlagen nicht überschritten werden.

Erfindungsgemäß erfolgt eine Steuerung der Auffahrt auf Autobahnen, da der Fahrer bei der Auffahrt auf eine Autobahn die Belastung des jeweiligen Straßenabschnittes nicht kennt. Bei vorhandener Grenzbelastung muss von der Leitstelle die Auffahrt gesperrt werden.

Außerdem können Staus, die sich nie ganz vermeiden lassen, gesteuert aufgelöst werden. Beim Auflösen eines Staus müssen alle im Stau stehenden Fahrzeuge 20 so gesteuert werden, dass erst mit Erreichen einer ausreichenden Lücke zum voran fahrenden Fahrzeug 20 gestartet werden kann. Anderenfalls kann das Netz zusammenbrechen. Gegebenenfalls muss das Anfahren im Dieselbetrieb erfolgen.

Insgesamt ergeben sich als Vorteile des erfindungsgemäßen Verkehrssteuerungssystems 10 eine Planbarkeit des Energiebedarfs in Abhängigkeit von Zeit und Ort, ungeplante Transporte werden durch höhere Energiekosten bestraft und damit reduziert, eine effiziente Auslegung der elektrischen Anlagen, eine Kostenoptimierung der Infrastruktur für elektrischen Betrieb, eine vorausschauende Energiebedarfsrechnung und Energiebezugsoptimierung, ein optimierter Verkehrsfluss durch Stauvermeidung und Stauauflösung, sowie eine umweltschonende Bewältigung der Transporte.

## Patentansprüche

1. System (10) zur Verkehrssteuerung elektrisch getriebener Fahrzeuge (20) in einem Straßennetz, wobei die Fahrzeuge (20) zur Energieübertragung während der Fahrt mit einem straßenseitig angeordneten Fahrleitungsnetz koppelbar sind, welches getrennt voneinander versorgte Speiseabschnitte (12) mit auslegbaren Lastgrenzen aufweist, umfassend Prognosemittel zur Prognose eines Lastbedarfs in einem Speiseabschnitt (12), Beeinflussungsmittel zur Beeinflussung einer Lastaufnahme von Fahrzeugen (20) im Speiseabschnitt (12), und Steuerungsmittel (60) zur Bewertung des prognostizierten Lastbedarfs hinsichtlich der Lastgrenze des Speiseabschnittes (12) und zur Auswahl von erforderlichen Steuerungseingriffen für Beeinflussungsmittel, wobei die Prognosemittel Erfassungsmittel zur Erfassung einer Verkehrs- und/oder Wettersituation für einen dem Speiseabschnitt (12) zugeordneten Straßenabschnitt (11) und Rechenmittel (40) zur Berechnung des Lastbedarfs aus der erfassten Verkehrs- und/oder Wettersituation und/oder aus einem Verlauf der Straßenneigung des Straßenabschnittes (11) anhand eines Prognosemodells (41), welches die Lastaufnahme eines Fahrzeugs (20) in Abhängigkeit seines Gesamtgewichts und/oder seiner Geschwindigkeit und/oder Beschleunigung bei unterschiedlichen Straßenneigungen und/oder der Wettersituation angibt, aufweisen, wobei die Beeinflussungsmittel straßenseitig angeordnete Aktorikeinrichtungen (50) und/oder im Fahrzeug (20) angeordnete Fahrzeuggeräte (21) aufweisen, mittels derer Hinweise an Fahrer von Fahrzeugen (20) zur Verminderung der Lastaufnahme als Steuereingriffe ausgebbar sind, wobei die Steuerungsmittel (60) dazu ausgebildet sind, als Fahrerhinweis eine Aufforderung zur Umstellung von Elektroauf Kraftstoffantrieb und/oder eine Aufforderung zur Umstellung der Lastaufnahme vom Fahrleitungsnetz auf einen fahrzeugseitigen Energiespeicher (22), und/oder zur Rückspeisung von Energie aus einem fahrzeugseitigen Energiespeicher (22) in das Fahrleitungsnetz auszuwählen.

2. Verkehrssteuerungssystem (10) nach Anspruch 1, wobei die Erfassungsmittel straßenseitig angeordnete Fahrzeugdetektoren (30) zur Erfassung einer Verkehrsstärke und/oder einer mittleren Geschwindigkeit aufweisen.

3. Verkehrssteuerungssystem (10) nach Anspruch 1 oder 2, wobei die Erfassungsmittel in Fahrzeugen (20) angeordnete Fahrzeuggeräte (21) zur Erfassung der aktuellen Position und Geschwindigkeit des jeweiligen Fahrzeugs (20) sowie zur Übertragung von zugeordneten Daten an die Rechenmittel (40) aufweisen.

4. Verkehrssteuerungssystem (10) nach einem der Ansprüche 1 bis 3, wobei die Erfassungsmittel eine Schnittstelle zu einem Flottenmanagementsystem (31) einer Flotte von Fahrzeugen (20) aufweisen, über welche von einem Flottenbetreiber geplante Touren der Fahrzeuge (20) abrufbar sind.

5. Verkehrssteuerungssystem (10) nach einem der Ansprüche 1 bis 4, wobei die Erfassungsmittel eine Schnittstelle zu einem Verkehrsinformationssystem (32) aufweisen, über welche die Verkehrssituation im Bereich des Straßenabschnittes (11) abrufbar ist.

6. Verkehrssteuerungssystem (10) nach einem der Ansprüche 1 bis 5, wobei die Erfassungsmittel straßenseitig angeordnete Wettersensoren (33) und/oder eine Schnittstelle zu einem Wetterinformationssystem (34) aufweisen, über welche die Wettersituation im Bereich des Straßenabschnittes (11) abrufbar ist.

7. Verkehrssteuerungssystem (10) nach einem der Ansprüche 1 bis 6, wobei das Fahrzeuggerät (21) dazu ausgebildet ist, Fahrerhinweise automatisch durch Ansteuerung von Fahrzeugkomponenten umzusetzen.

8. Verkehrssteuerungssystem (10) nach Anspruch 7, wobei die Steuerungsmittel (60) dazu ausgebildet sind, als Fahrerhinweis eine Routenvorgabe zur Umfahrung eines überlastgefährdeten Speiseabschnittes (12) auszuwählen.

9. Verkehrssteuerungssystem (10) nach Anspruch 7 oder 8, wobei die Steuerungsmittel (60) dazu ausgebildet sind, als Fahrerhinweis eine Geschwindigkeitsbeschränkung in einem überlastgefährdeten Speiseabschnitt (12) auszuwählen.

10. Verkehrssteuerungssystem (10) nach einem der Ansprüche 7 bis 9, wobei die Steuerungsmittel (60) dazu ausgebildet sind, als Fahrerhinweis eine Sperrung der Einfahrt in einen überlastgefährdeten Speiseabschnitt (12) auszuwählen.

11. Verkehrssteuerungssystem (10) nach einem der Ansprüche 7 bis 10, wobei die Steuerungsmittel (60) dazu ausgebildet sind, als Fahrerhinweis eine Anfahranweisung zur Auflösung eines Verkehrsstaues in einem überlastgefährdeten Speiseabschnitt (12) auszuwählen.

12. Verkehrssteuerungssystem (10) nach einem der Ansprüche 1 bis 11, wobei die Steuerungsmittel (60) dazu ausgebildet sind, das Fahrleitungsnetz zum Lastausgleich mit einem anderen Energieversorgungsnetz (80) zu koppeln.

13. Verkehrssteuerungssystem (10) nach einem der Ansprüche 1 bis 12, wobei die Rechenmittel (40) dazu ausgebildet sind, Energiebezugskosten für eine Tour, die durch eine Tourenroute im Straßennetz und/oder einen Tourenzeitraum und/oder das Gesamtgewicht des Fahrzeuges (20) definierbar ist, anhand des Prognosemodells (41), welches ferner einen bezugszeitabhängigen Energiepreis von über das Fahrleitungsnetz zu beziehender Energie angibt, zu berechnen.

14. Verkehrssteuerungssystem (10) nach Anspruch 13, wobei über das Flottenmanagementsystem (31) eine vom Flottenbetreiber geplante Tour buchbar ist, wobei der den Energiebezugskosten zugrundeliegende Energiepreis abhängig vom Buchungszeitpunkt und/oder von gegebenenfalls vorgenommenen Buchungsänderungen variierbar ist.

15. Verkehrssteuerungssystem (10) nach einem der Ansprüche 1 bis 14, mit Abrechnungsmitteln (70), die zur zentralen Berechnung und Erhebung von bei der Nutzung des Straßen- und Fahrleitungsnetzes durch ein Fahrzeug (20) verursachten Energiebezugskosten und/oder Straßenbenutzungsgebühren und/oder Parkgebühren ausgebildet sind.

## Claims

1. System (10) for traffic control of electrically driven vehicles (20) in a road network, wherein the vehicles (20) can be coupled to a catenary supply arranged at the roadside for energy transmission during the journey, which catenary supply has feeder sections (12) supplied separately from one another with configurable load limits, comprising forecasting means for forecasting a load requirement in a feeder section (12), influencing means for influencing a load handling of vehicles (20) in the feeder section (12), and control means (60) for analysing the forecast load requirement with regard to the load limits of the feeder section (12) and for selecting necessary control actions for influencing means, wherein the forecasting means have capture means for capturing a traffic and/or weather situation for a road section (11) assigned to the feeder section (12) and computing means (40) for calculating the load requirement from the captured traffic and/or weather situation and/or from a course of the road gradient of the road section (11) on the basis of a forecast model (41), which indicates the load handling of a vehicle (20) as a function of its total weight and/or of its speed and/or acceleration at different road gradients and/or the weather situation, wherein the influencing means have actuator apparatuses (50) arranged at the roadside and/or vehicle devices (21) arranged in the vehicle (20), by means of which notifications can be output to drivers of vehicles (20) as control actions to reduce the load handling, wherein the control means (60) are embodied to select as the driver notification a request for switching from electric drive to fuel drive and/or a request for switching the load handling from the catenary supply to a vehicle-side energy store (22), and/or for energy recovery of energy from a vehicle-side energy store (22) into the catenary supply.

2. Vehicle control system (10) according to claim 1, wherein the capture means have vehicle detectors (30) arranged at the roadside for capturing a traffic volume and/or an average speed.

3. Vehicle control system (10) according to claim 1 or 2, wherein the capture means have vehicle devices (21) arranged in vehicles (20) for capturing the current position and speed of the respective vehicle (20) as well as for transmitting associated data to the computing means (40).

4. Vehicle control system (10) according to one of claims 1 to 3, wherein the capture means have an interface to a fleet management system (31) of a fleet of vehicles (20), by way of which tours of the vehicles (20) planned by a fleet operator can be retrieved.

5. Vehicle control system (10) according to one of claims 1 to 4, wherein the capture means have an interface to a traffic information system (32), by way of which the traffic situation in the region of the road section (11) can be retrieved.

6. Vehicle control system (10) according to one of claims 1 to 5, wherein the capture means have weather sensors (33) arranged at the roadside and/or an interface to a weather information system (34), by way of which the weather situation in the region of the road section (11) can be retrieved.

7. Vehicle control system (10) according to one of claims 1 to 6, wherein the vehicle device (21) is embodied to implement driver notifications automatically by actuating vehicle components.

8. Vehicle control system (10) according to claim 7, wherein the control means (60) are embodied to select as a vehicle notification a tour specification for bypassing a feeder section (12) prone to overloading.

9. Vehicle control system (10) according to claim 7 or 8, wherein the control means (60) are embodied to select as a vehicle notification a speed restriction in a feeder section (12) prone to overloading.

10. Vehicle control system (10) according to one of claims 7 to 9, wherein the control means (60) are embodied to select as a vehicle notification a blocking of entry into a feeder section (12) prone to overloading.

11. Vehicle control system (10) according to one of claims 7 to 10, wherein the control means (60) are embodied to select as a vehicle notification an approach instruction for resolving a traffic jam in a feeder section (12) prone to overloading.

12. Vehicle control system (10) according to one of claims 1 to 11, wherein the control means (60) are embodied to couple the catenary supply to another power supply network (80) for load compensation.

13. Vehicle control system (10) according to one of claims 1 to 12, wherein the computing means (40) are embodied to calculate energy procurement costs for a tour which can be defined by a tour route in the road network and/or a tour time period and/or the total weight of the vehicle (20), on the basis of the forecast model (41), which further indicates a reference time-dependent energy price of energy to be procured via the catenary supply.

14. Traffic control system (10) according to claim 13, wherein a tour planned by the fleet operator can be booked by way of the fleet management system (31), wherein the energy price underlying the energy procurement costs can be varied as a function of the booking time and/or any booking changes that may need to be carried out.

15. Traffic control system (10) according to one of claims 1 to 14, with billing means (70) which are embodied for central calculation and charging of energy procurement costs and/or road usage fees and/or parking fees incurred by a vehicle (20) during the use of the road network and catenary supply.

## Revendications

1. Système (10) de régulation de la circulation de véhicules (20) électriques dans un réseau routier, les véhicules (20) pouvant, pour le transfert d'énergie, être reliés pendant le trajet, à un réseau de caténaire, qui est disposé du côté de la route et qui a des tronçons (12) d'alimentation alimentés séparément les uns des autres et ayant des limites de charge pouvant être fixées, comprenant des moyens de pronostic pour pronostiquer un besoin de charge dans un tronçon (12) d'alimentation, des moyens d'influence pour influencer une absorption de charge par des véhicules (20) dans le tronçon (12) d'alimentation et des moyens (60) de commande pour évaluer le besoin de charge pronostiqué du point de vue de la limite de charge du tronçon (12) d'alimentation et pour choisir des interventions de commande nécessaires des moyens d'influence, les moyens de pronostic ayant des moyens de détection pour détecter une situation de circulation et/ou météorologique pour un tronçon (11) routier affecté au tronçon (12) d'alimentation et des moyens (40) de calcul pour calculer le besoin de charge à partir de la situation détectée de circulation et/ou météorologique et/ou à partir d'un tracé de la pente du tronçon (11) routier, à l'aide d'un modèle (41) de pronostic, qui indique l'absorption de charge par un véhicule (20), en fonction de son poids total et/ou de sa vitesse et/ou de son accélération à des pentes de routes différentes et/ou dans des situations météorologiques différentes, dans lequel les moyens d'influence ont des dispositifs (50) d'actionnement montés du côté de la route et/ou des appareils (21) de véhicule montés dans le véhicule (20) au moyen desquels des indications peuvent être données comme intervention de commande à des conducteurs de véhicules (20) pour diminuer l'absorption de charge, les moyens (60) de commande étant constitués pour choisir, comme indication au conducteur, une invitation à passer de la traction électrique à la traction par carburant, et/ou une invitation à passer de l'absorption de charge du réseau de caténaire à un accumulateur (22) d'énergie du côté du véhicule et/ou pour renvoyer de l'énergie d'un accumulateur (22) d'énergie du côté du véhicule au réseau de caténaire.

2. Système (10) de régulation de la circulation suivant la revendication 1, dans lequel les moyens de détection ont des détecteurs (30) de véhicule, qui sont disposés du côté de la route, pour détecter une intensité de la circulation et/ou une vitesse moyenne.

3. Système (10) de régulation de la circulation suivant la revendication 1 ou 2, dans lequel les moyens de détection ont des appareils (21) de véhicule disposés dans des véhicules (20) pour détecter la position instantanée et la vitesse instantanée du véhicule (20) respectif, ainsi que pour transmettre des données associées aux moyens (40) de calcul.

4. Système (10) de régulation de la circulation suivant l'une des revendications 1 à 3, dans lequel les moyens de détection ont une interface avec un système (31) de gestion d'une flotte de véhicules (20), interface par laquelle des tournées des véhicules (20), prévues par un exploitant de la flotte, peuvent être appelées.

5. Système (10) de régulation de la circulation suivant l'une des revendications 1 à 4, dans lequel les moyens de détection ont une interface avec un système (32) d'informations sur la circulation, interface par laquelle la situation de la circulation, dans la partie du tronçon (11) de la route, peut être appelée.

6. Système (10) de régulation de la circulation suivant l'une des revendications 1 à 5, dans lequel les moyens de détection ont des capteurs (33) météorologiques disposés du côté de la route et/ou une interface avec un système (34) d'informations sur la météorologie, interface par laquelle la situation météorologique, dans la partie du tronçon (11) de la route, peut être appelée.

7. Système (10) de régulation de la circulation suivant l'une des revendications 1 à 6, dans lequel l'appareil (21) de véhicule est constitué pour transformer des indications au conducteur automatiquement en commandant des composants du véhicule.

8. Système (10) de régulation de la circulation suivant la revendication 7, dans lequel les moyens (60) de commande sont constitués pour choisir, comme indication au conducteur, une prescription d'itinéraire pour éviter un tronçon (12) d'alimentation menacé de surcharge.

9. Système (10) de régulation de la circulation suivant la revendication 7 ou 8, dans lequel les moyens (60) de commande sont constitués pour choisir, comme indication au conducteur, une limitation de vitesse dans un tronçon (12) d'alimentation menacé d'une surcharge.

10. Système (10) de régulation de la circulation suivant l'une des revendications 7 à 9, dans lequel les moyens (60) de commande sont constitués pour choisir, comme indication au conducteur, de ne pas entrer dans un tronçon (12) d'alimentation menacé d'une surcharge.

11. Système (10) de régulation de la circulation suivant l'une des revendications 7 à 10, dans lequel les moyens (60) de commande sont constitués pour choisir, comme indication au conducteur, une instruction de quitter une file d'attente dans un tronçon (12) d'alimentation menacé d'une surcharge.

12. Système (10) de régulation de la circulation suivant l'une des revendications 1 à 11, dans lequel les moyens (60) de commande sont constitués pour relier le réseau de caténaire à un autre réseau (80) d'alimentation en énergie, afin d'obtenir une compensation de charge.

13. Système (10) de régulation de la circulation suivant l'une des revendications 1 à 12, dans lequel les moyens (40) de calcul sont constitués de manière à calculer le coût de l'énergie pour une tournée, qui peut être défini par un itinéraire de tournée dans le réseau routier et/ou par une durée de tournée et/ou par le poids total du véhicule (20), à l'aide du modèle (41) de pronostic, qui indique en outre un prix, qui dépend du temps de sa fourniture, de l'énergie à fournir par le réseau de caténaire.

14. Système (10) de régulation de la circulation suivant la revendication 13, dans lequel il peut être comptabilisé, par le système (31) de gestion d'une flotte, une tournée planifiée par le gestionnaire de flotte, le prix de l'énergie, à la base des coûts de fourniture d'énergie, étant variable en fonction de l'instant de comptabilisation et/ou de variations de comptabilisation effectuée le cas échéant.

15. Système (10) de régulation de la circulation suivant l'une des revendications 1 à 14, comprenant des moyens (70) de règlement constitués pour calculer et lever centralement des coûts de fourniture d'énergie et/ou des péages d'utilisation de route et/ou des péages de stationnement provoqués par l'utilisation par un véhicule (20) du réseau routier et du réseau de caténaire.
